# EUROPEAN PATENT SPECIFICATION

(11) **EP 0 730 127 B1**
(45) Date of publication and mention of the grant of the patent: **25.09.2002**
(21) Application number: 96200497.4
(22) Date of filing: 27.02.1996
(51) Int. Cl.: F24H 8/00, F24H 1/44

(54) **Heat exchanger having a universal combustion chamber and condensate discharge**
Wärmetauscher mit universellem Verbrennungsraum und Kondensatablauf
Echangeur de chaleur avec chambre de combustion universelle et purgeur de condensat

(30) Priority: 28.02.1995 NL 9500392
(43) Date of publication of application: 04.09.1996
(73) Proprietor: APPARATENFABRIEK WARMTEBOUW B.V., 5740 AA Beek en Donk (NL)
(72) Inventor: Deckers, Jan Hubertus, 5912 TW Venlo (NL)
(74) Representative: Smulders, Theodorus A.H.J., Ir.

(56) References cited:
- EP-A- 0 250 874
- EP-A- 0 547 641
- DE-A- 3 411 437

## Description

The invention relates to a heat exchanger according to the preamble of claim 1. Such a heat exchanger is known from EP-A-0250874.

EP-A-0250874 discloses a heat exchanger, having a heat exchange section and a combustion chamber connecting thereto adjacent the top thereof, in which the combustion chamber includes an angle of at least about 90° with the heat exchange section. In this known heat exchanger the combustion chamber is positioned above the heat exchange section. Condensate and other moisture can flow from the combustion chamber directly into the top end of the heat exchange section. Condensate and other moisture present in the combustion chamber will flow into the heat exchange section in an area in which the temperature is highest during use in said heat exchange section.

NL-A-9200282 discloses a heat exchanger, comprising a combustion chamber which is also arranged directly above a heat exchange section, in such a manner that the combustion chamber is in line therewith. During use, flames and/or flue gases heated by the flames are guided directly through the heat exchange section, where heat exchange takes place between the heated flue gases and water being passed through ducts arranged along the heat exchange section. The cooled flue gases are discharged adjacent the end of the heat exchange section remote from the combustion chamber. The flue gases are cooled to such an extent that condensation occurs in the lower part of the heat exchanger, which condensate is discharged to the outside.

In particular during the heating up of the heat exchanger, condensation occurs in the combustion chamber. In this known heating boiler, the condensate flows directly into the heat exchange section and evaporates therein or mixes in the lower part of the heat exchange section with condensate formed therein. As a result of the combustion chamber being arranged directly above the heat exchange section, the known heat exchanger is relatively voluminous and, in particular, high. As a consequence, incorporation of such a known heat exchanger into a heating boiler for use in space and/or sanitary heating leads to a heating boiler of undesired dimensions.

The object of the invention is to provide a heat exchanger of the type described in the preamble which is compact and applicable in a condensing heating boiler, and which moreover does not entail disadvantages resulting from condensate forming in the combustion chamber. To that end, the heat exchanger according to the invention is characterized by the features according to claim 1.

Due to the combustion chamber according to the invention including an angle of at least about 90° with the heat exchange section connected thereto, the overall height of the heat exchanger is less than in the case of the known arrangement of the combustion chamber and the heat exchange section - given that elements of the same dimensions are used - in particular when the combustion chamber, in accordance with a further elaboration of the invention, includes an angle of about 180° with the heat exchange section. Moreover, by guiding the flames and/or the flue gases from the combustion chamber to the heat exchange section, an ideal heating pattern can be obtained. Thus, for instance, resonance and the like resulting from the flame front can be prevented.

In such an arrangement of the combustion chamber with respect to the heat exchange section, moisture formed in the combustion chamber or supplied thereto, such as condensate, can no longer flow directly into the heat exchange section, since the lowest point of the combustion chamber in this arrangement will always be lower than the transition between the heat exchange section and the combustion chamber connecting thereto at the top. The moisture in the combustion chamber has too high a temperature to be discharged directly from the combustion chamber to the outside or to a discharge arranged adjacent the lower end of the heat exchange section. In order to prevent this moisture from remaining behind in the combustion chamber as a consequence thereof, and thereby causing nuisance and possibly damage, a passage is provided between the lower end of the combustion chamber and the heat exchange section. As a result, condensate and other moisture can flow from the combustion chamber via the passage into the heat exchange section, and condensate is prevented from flowing into the burner.

Since the hot moisture, possibly in the form of water vapour, can flow directly into the heat exchange section, where it is added to the flue gas heated for the heat exchange, cooling of the moisture is suitably provided, while moreover the heat of the moisture is used. Adjacent the lower end of the heat exchange section, the moisture has acquired a temperature which is sufficiently low for it to be discharged to the outside. In this way, therefore, a highly compact heat exchanger is obtained, particularly suitable for use in a condensing heating boiler.

In a further elaboration, the heat exchanger is characterized by the features according to claims 3 and 4.

In this embodiment, the heat exchanger according to the invention can be combined, as desired, with different burners, depending on the desired application. Thus, for instance, the power of the burner can be adapted and both premix burners and fan burners, as well as other burner systems can be arranged in the combustion chamber. Through an appropriate choice of the insertion depth and the flame length, it is possible, for instance, to keep the flame front entirely within the combustion chamber or, conversely, to guide it into the heat exchange section via a reversing plate. As a result, the heat exchanger can be used in all kinds of applications. By arranging the combustion chamber parallel to the heat exchange section, the compactness of the heat exchanger according to the invention is further increased.

In a further elaboration, the heat exchanger according to the invention is characterized by the features according to claim 5.

By forming an open connection between the bottom surface of the combustion chamber and a central area of the heat exchange section, in operation the condensation and other moisture is brought from the combustion chamber directly into a relatively hot, but not maximally heated, part of the heat exchanger, so that the moisture is at least substantially not further heated, which might be unfavourable, in particular from an energetic point of view. It is then particularly advantageous if the open connection opens into the heat exchange section approximately adjacent an area where condensation can arise, since the temperature of the heat exchanger and that of the moisture flowing through the opening during use will then be approximately equal.

In a particularly advantageous further embodiment, the heat exchanger according to the invention is characterized by the features according to claim 9.

By positioning the siphon adjacent the lower end of the heat exchange section, the condensate formed in the heat exchange section during use is discharged directly to the siphon and thence to the surroundings, for instance a discharge. In particular in the case of condensing high-efficiency boilers, this is particularly favourable.

In a further elaboration, the siphon is at least partly made of plastic. Since the moisture, when reaching the siphon, has cooled sufficiently, like the flue gases, even if it originates from the combustion chamber, the siphon can be made of plastic, which would not be possible if the moisture were passed directly from the combustion chamber into a siphon. An important advantage of the siphon being made of plastic is that plastic is better resistant to corrosion and the like and moreover that the siphon can be manufactured therefrom in a relatively inexpensive way.

Further elaborations of the heat exchanger according to the invention are characteristically described in the other subclaims and in the description.

To clarify the invention, an exemplary embodiment of a heat exchanger is described with reference to the drawings.
Fig. 1 shows in cross section along the line I-I in Fig. 2 a side elevation of a heat exchanger according to the invention;
Fig. 2 shows in cross section along the line II-II in Fig. 1 a front view of a heat exchanger according to the invention; and
Fig. 3 shows in cross section along the line III-III in Fig. 1 a top plan view of a heat exchanger according to the invention.

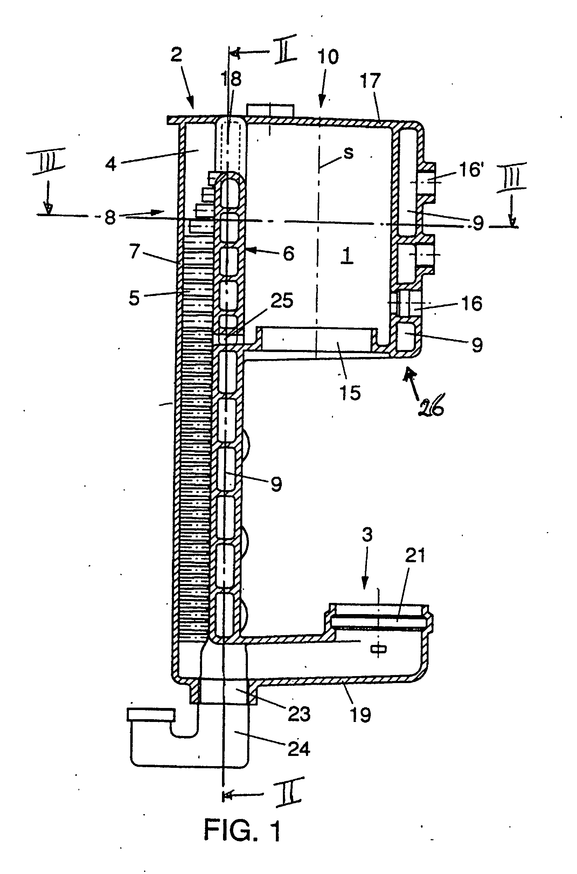

Fig. 1 is a sectional side elevation of a heat exchanger which comprises a combustion chamber 1, a heat exchange section 2 and a discharge 3. The heat exchange section 2 comprises a box-shaped space 4 for conveying flue gases, which space 4 is filled with rows and columns of spaced apart projections 5 extending from a rear wall 6 as far as a point close to the opposite front wall 7. Instead of projections 5, naturally other kinds of heating surface-enlarging elements can be employed, such as baffles and the like. The front wall 7 is optionally detachable. In the upper rows 8, the projections 5 are shorter, for reasons explained in more detail hereinafter. Included in the rear wall 6 is a meandering water duct 9 which, adjacent the top 10, extends partly around the combustion chamber 1 and comprises connecting means 11 for discharging water heated in the heat exchange section, and adjacent the lower end 12 comprises connecting means 13 for a water supply pipe, for instance for sanitary water heating or water for space heating.

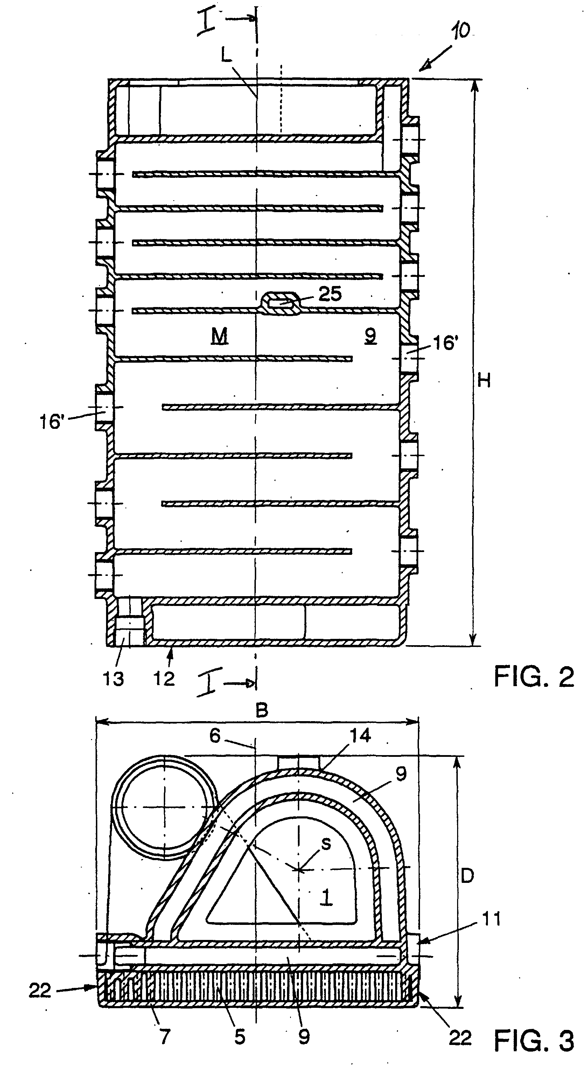

On the side of the rear wall 6 remote from the projections 5, adjacent the top of the heat exchanger, the combustion chamber 1 is arranged. The combustion chamber 1 is somewhat tubular, having a somewhat rounded-off triangular cross section in top plan view. The longitudinal axis S of the combustion chamber 1 extends approximately parallel to the centre line L of the heat exchanger. The base covers approximately the entire width of the rear wall 6, the top 14 is offset (to the right in Fig. 3) with respect to the vertical centre line L of the heat exchanger. At the lower end an opening 15 is left clear, through which a burner can be inserted in the combustion chamber 1. The burner can be selected in accordance with the desired use of the heat exchanger, according to dimensions, shape, insertion depth, capacity, burner type and the like, and is not shown in the drawing. It is noted that the burner can also at least partly be formed together with the combustion chamber 1 and form an integral whole therewith. Left clear at the back are openings 16', for removing cores, if any, and an opening 16 for connecting, for instance, a water discharge, a gas conduit, electronics and cable lead-through and the like. Depending on the design of the heat exchanger and the desired use, these can of course be designed differently or be omitted. The sidewall of the combustion chamber 1 is further substantially closed. The water duct 9 too is provided at suitable points with core removal openings 16' which are closed during normal use of the heat exchanger.

The combustion chamber is closed off at the top by an upper end wall 17 which covers both the combustion chamber 1 and the heat exchange section 2 and adjoins the front wall 7. Between the rear wall 6 and the upper end wall 17 an opening 18 is left clear, through which flue gases heated by the burner in the combustion chamber 1 can be passed to the heat exchange section 2, between the projections 5 down to the lower end of the heat exchange section.

At the lower end, the heat exchange section 2 is connected with a proper fit to a flue tube connecting stub 19 which comprises a pipe section 20 extending slightly upwards and towards the rear, which at the top thereof, on the side remote from the heat exchange section 2, is provided with connecting means 21 for connecting a flue tube. These connecting means 21 are offset (to the left, in Fig. 3) with respect to the vertical centre line L of the heat exchanger, in such a manner that they extend entirely outside the contour of the combustion chamber 1 as viewed in top plan view (Fig. 3), but inside an (imaginary) rectangle bounded on opposite sides by (the produced part of) the sidewalls 22 of the heat exchange section 2. As a result, a straight flue tube can extend vertically from the connecting means 21 behind the rear wall 6 and along the combustion chamber 1. In this way a heat exchanger has been obtained which can be incorporated into a compact, rectangular housing of dimensions substantially determined by the height H and width B of the heat exchange section 2 and the combined depth D of the heat exchange section and the combustion chamber 1 or the flue tube connecting stub 19.

Preferably, the rear wall 6 with water duct 9, the projections 5, the combustion chamber 1 with upper end wall 17 and the flue tube connecting stub 19 with connecting means 21 and optionally the front wall 7 are constructed in one piece as a casting from aluminium or a similar light metal.

The flue tube connecting stub 19 is provided at the lower end thereof with an opening 23, for instance provided with thread, in which a siphon 24 can be secured. The siphon 24 is preferably designed in plastic and can be a commercially available siphon. Via the siphon 24 condensate can be discharged from the heat exchanger, continuously or periodically. By making the siphon 24 of plastic, the advantage gained is that corrosively active condensate does not damage the heat exchanger. Moreover, such a siphon is relatively cheap and easy to fit, replace and use. The siphon serves as a water seal, so that the flue gases are prevented from being discharged in a manner other than via the flue tube intended for the purpose.

It is important that condensate is timely discharged, so that it will not evaporate anymore. In view of the low temperature of the flue gases and the condensate adjacent the lower end of the heat exchanger, plastic is a suitable material for the siphon. Of course, other materials are also applicable, such as aluminium, but this is at least more expensive.

In particular upon ignition of the burner during use and heat-up of the heat exchanger, condensation arises in the combustion chamber 1. When the combustion chamber 1 is completely closed, this moisture is trapped, with all the consequences of corrosion and other damage. Moreover, moisture in the combustion chamber has an adverse effect on the operation of the burner. Therefore, in a heat exchanger according to the invention, an open connection 25 extending through the rear wall 6 is provided between the bottom of the combustion chamber 1 and a central area M of the heat exchange section 2. Condensate (and other moisture, if any) flows from the combustion chamber 1 via the connection 25 directly between the projections 5 and via the rear wall 6 and the flue tube connecting stub 19 into the siphon 24. Since the moisture enters the heat exchange section in the central area M, it will not, at least hardly, be heated anymore, but will give off its heat when flowing down, such that it ends up cooled in the siphon 24. As a consequence, no special heat-resistant siphon needs to be used and moreover an efficiency advantage is gained. If too hot water were to flow into the siphon, it would evaporate again, with the result that the siphon would lose its function as water seal. Due to the appropriate cooling, this risk is prevented in a heat exchanger according to the invention. Moisture collecting in the flue tube connecting stub 19 will also flow into the siphon 24 due to the slight inclination.

The projections 5 in the upper rows 8 are shorter than the others, the length increasing from the top row to the maximum length in the fifth row. As a result, in the upper part of the heat exchange section 2, where the flue gases are hottest, a good heat transfer is also provided for. Moreover, by virtue of the asymmetrical arrangement of the burner with respect to the centre line L and the reversal of the direction of flow of the heated flue gases at the top of the heat exchanger a favourable heat front and flow pattern through the heat exchanger is obtained, so that undesired vibrations and sounds are avoided and an optimum heat exchange between the hot flue gases and the water flowing through the duct 9 is realized. To that end, the diameter of the water conveying duct 9 decreases towards the top, so that the flow velocity of the water increases according as the temperature of the water increases. The interval between the projections 5 decreases towards the bottom, the projections are arranged more closely, so that the flow velocity of the cooled gas is increased.

A heat exchanger according to the invention can be incorporated into a boiler housing which has approximately the internal dimensions B*H*D, while the burner is easy to fit and readily accessible, and any switching and protection electronics and the like can be arranged, for instance, in the interior between the combustion chamber 1 and the flue tube connecting stub 19. As a consequence, a heating boiler can be obtained which has a capacity of, for instance, between 5 and 35 kW or more and yet is particularly compact. By virtue of a substantially one-piece design of the heat exchanger, an additional gain in compactness and heat capacity is obtained. By virtue of the opening between the combustion chamber and the heat exchange section, adverse influences, if any, of moisture in the combustion chamber 1 are prevented.

The combustion chamber can be of different design and the longitudinal axis thereof can extend, for instance, approximately at an angle of 90° with respect to the vertical, that is, substantially transversely to the heat exchange section, while the burner can be inserted from a rear side into the combustion chamber. The heat exchange section can be of bent design and extend along a part of a substantially cylindrical combustion chamber, thereby including a segment of a circle, in order to obtain a larger heating surface, given the same external dimensions. Further, the flue tube connecting stub can be formed in such a manner that the connecting means for a flue tube are disposed adjacent, for instance, the rear side. The heat exchange section can be divided in various other ways, for instance into several chambers for different temperature ranges. The passage between the combustion chamber and the heat exchange section can terminate at a lower point and, for the purpose of a better discharge, several such passages may be formed.

## Claims

1. A heat exchanger of a condensing type with a heat exchange section (2) and a combustion chamber (1) connecting thereto adjacent the top thereof, the combustion chamber (1) having an end distanced from said top and positioned below said top, while a passage (25) exists between said lowest end of said combustion chamber (1) and the heat exchange section (2), the arrangement being such that condensate and other moisture flow from the combustion chamber (1) via the passage (25) into the heat exchange section (2) into an area (M) where, during use, the temperature is lower than the maximum temperature in the heat exchange section (2).

2. A heat exchanger according to claim 1, **characterized in that** the longitudinal axis (S) of the combustion chamber (1) encloses an angle with the main direction of flow of flue gases through the heat exchange section (2) between the top end next to the top end (10) of the water duct (9) to the lower end next to the lower end (12) of said water duct (9), which angle is at least about 90°, especially significantly greater than 90° and preferably about 180°.

3. A heat exchanger according to any one of the preceding claims, **characterized in that** the combustion chamber (1) is arranged for receiving burners of different kinds and dimensions.

4. A heat exchanger according to claim 3, **characterized in that** the longitudinal axis (s) of the combustion chamber (1) extends substantially parallel to the direction of flow of the heat exchange section (2).

5. A heat exchanger according to any one of the preceding claims, **characterized in that** the passage is formed by a drain pipe extending between a first opening located adjacent a bottom surface of said lowest end of the combustion chamber (1) and a second opening located adjacent a central area of a heat exchange chamber defining the heat exchange section (2).

6. A heat exchanger according to claim 5, **characterized in that** the second opening is located in an area where during normal use of the heat exchanger condensation can occur.

7. A heat exchanger according to any one of the preceding claims, **characterized in that** the heat exchange section (2) is box-shaped, with the combustion chamber (1) extending along an outer side, and preferably a rear side, of the box shape.

8. A heat exchanger according to any one of the preceding claims, **characterized in that** the combustion chamber (1) is arranged in slightly offset relation to a centre line of the heat exchanger section (2).

9. A heat exchanger according to any one of the preceding claims, **characterized in that** adjacent the lower end of the heat exchange section (2) a siphon is connected, which is arranged for discharging moisture such as condensate to the outside of the heat exchanger.

10. A heat exchanger according to claim 9, **characterized in that** the siphon in transverse direction of the heat exchanger is arranged in slightly offset relation to the combustion chamber (1), while a flue tube is connectable to the siphon at the top thereof, which flue tube can extend behind the heat exchange section (2) along the combustion chamber (1).

11. A heat exchanger according to claim 9 or 10, **characterized in that** the siphon is made of plastic and the combustion chamber (1) and the walls surrounding the heat exchange section (2) are made of metal, and preferably of aluminium.

12. A heat exchanger according to any one of the preceding claims, **characterized in that** at least the combustion chamber (1) and the heat exchange section (2) are included in one casting.

## Patentansprüche

1. Wärmetauscher vom kondensierenden Typ mit einem Wärmetauschabschnitt (2) und einer nahe der Oberseite desselben damit verbundenen Verbrennungskammer (1), wobei die Verbrennungskammer (1) ein von der Oberseite beabstandetes und unterhalb der Oberseite angeordnetes Ende aufweist, wobei zwischen dem untersten Ende der Verbrennungskammer (1) und dem Wärmetauschabschnitt (2) ein Durchlaß (25) besteht, wobei die Anordnung derart aufgebaut ist, daß Kondensat und andere Feuchtigkeit von der Verbrennungskammer (1) über den Durchlaß (25) in den Wärmetauschabschnitt (2) in einen Bereich (M) fließt, in dem die Temperatur im Gebrauch niedriger als die Maximaltemperatur im Wärmetauschabschnitt (2) ist.

2. Wärmetauscher nach Anspruch 1, **dadurch gekennzeichnet, daß** die Längsachse (S) der Verbrennungskammer (1) einen Winkel mit der Hauptströmungsrichtung derAbgase durch den Wärmetauschabschnitt (2) zwischen dem dem oberen Ende (10) der Wasserleitung (9) nächsten oberen Ende und dem dem unteren Ende (12) der Wasserleitung (10) nächsten unteren Ende bildet, wobei der Winkel wenigstens ungefähr 90° und vorzugsweise ungefähr 180° beträgt.

3. Wärmetauscher nach einem der vorhergehenden Ansprüche, **dadurch gekennzeichnet, daß** die Verbrennungskammer (1) zum Aufnehmen von Brennern unterschiedlicher Art und Abmessungen ausgebildet ist.

4. Wärmetauscher nach Anspruch 3, **dadurch gekennzeichnet, daß** die Längsachse (S) der Verbrennungskammer(1) sich im wesentlichen parallel zur Strömungsrichtung des Wärmetauschabschnitts (2) erstreckt.

5. Wärmetauscher nach einem der vorhergehenden Ansprüche, **dadurch gekennzeichnet, daß** der Durchlaß durch ein Abflußrohr gebildet ist, das sich zwischen einer ersten Öffnung nahe einer Bodenfläche des untersten Endes der Verbrennungskammer (1) und einer zweiten Öffnung nahe einem Mittelbereich einer den Wärmetauschabschnitt (2) definierenden Wärmetauschkammer erstreckt.

6. Wärmetauscher nach Anspruch 5, **dadurch gekennzeichnet, daß** die zweite Öffnung in einem Bereich angeordnet ist, in den während des normalen Gebrauchs des Wärmetauschers Kondensation auftreten kann.

7. Wärmetauscher nach einem der vorhergehenden Ansprüche, **dadurch gekennzeichnet, daß** der Wärmetauschabschnitt (2) kastenförmig ist, wobei die Verbrennungskammer (1) sich entlang einer Außenseite, und vorzugsweise der Rückseite, der Kastenform erstreckt.

8. Wärmetauscher nach einem der vorhergehenden Ansprüche, **dadurch gekennzeichnet, daß** die Verbrennungskammer (1) gegenüber der Mittellinie des Wärmetauscherabschnitts (2) geringfügig versetzt angeordnet ist.

9. , Wärmetauscher nach einem der vorhergehenden Ansprüche, **dadurch gekennzeichnet, daß** nahe dem unteren Ende des Wärmetauscherabschnitts (2) ein Siphon angeschlossen ist, der zum Ablassen von Feuchtigkeit, wie Kondensat, nach außerhalb des Wärmetauschers dient.

10. Wärmetauscher nach Anspruch 9, **dadurch gekennzeichnet, daß** der Siphon in Querrichtung des Wärmetauschers in bezug auf die Verbrennungskammer (1) geringfügig versetzt angeordnet ist, während ein Abgasrohr mit dem Siphon an dessen oberen Ende verbindbar ist, wobei das Abgasrohr sich hinter dem Wärmetauscherabschnitt (2) entlang der Verbrennungskammer (1) erstrecken kann.

11. Wärmetauscher nach Anspruch 9 oder 10, **dadurch gekennzeichnet, daß** der Siphon aus Kunststoff besteht und die Verbrennungskammer (1) und die den Wärmetauscherabschnitt (2) umgebenden Wände aus Metall und vorzugsweise aus Aluminium bestehen.

12. Wärmetauscher nach einem der vorhergehenden Ansprüche, **dadurch gekennzeichnet, daß** zumindest die Verbrennungskammer (1) und der Wärmetauscherabschnitt (2) in einem Gehäuse enthalten sind.

## Revendications

1. Echangeur de chaleur du type à condensation, ayant une section (2) d'échange de chaleur et une chambre de combustion (1) qui se raccorde à elle près de sa partie supérieure, la chambre de combustion (1) ayant une extrémité placée à distance de la partie supérieure et positionnée au-dessous de cette partie supérieure, alors qu'un passage (25) existe entre l'extrémité la plus basse de la chambre de combustion (1) et la section d'échange de chaleur (2), la disposition étant telle que le condensat et autre humidité s'écoule depuis la chambre de combustion (1) par le passage (25) vers la section d'échange de chaleur (2) dans une région (M) dans laquelle, pendant l'utilisation, la température est inférieure à la température maximale de la section d'échange de chaleur (2).

2. Echangeur de chaleur selon la revendication 1, **caractérisé en ce que** l'axe longitudinal (S) de la chambre de combustion (1) délimite un angle, avec la direction principale d'écoulement des gaz usés dans la section d'échange de chaleur (2) de l'extrémité supérieure proche de l'extrémité supérieure (10) du conduit d'eau (9) vers l'extrémité inférieure proche de l'extrémité inférieure (12) du conduit d'eau (9), cet angle étant au moins d'environ 90°, et notamment notablement supérieur à 90° et de préférence d'environ 180°.

3. Echangeur de chaleur selon l'une quelconque des revendications précédentes, **caractérisé en ce que** la chambre de combustion (1) est destinée à loger des brûleurs de types et dimensions différents.

4. Echangeur de chaleur selon la revendication 3, **caractérisé en ce que** l'axe longitudinal (S) de la chambre de combustion (1) s'étend en direction pratiquement parallèle à la direction d'écoulement de la section d'échange de chaleur (2) .

5. Echangeur de chaleur selon l'une quelconque des revendications précédentes, **caractérisé en ce que** le passage est formé par un tube d'évacuation qui s'étend entre une première ouverture placée prés d'une surface inférieure de l'extrémité la plus basse de la chambre de combustion, (1) et une seconde ouverture adjacente à une région centrale d'une chambre d'échange de chaleur délimitant la section d'échange de chaleur (2) .

6. Echangeur de chaleur selon la revendication 5, **caractérisé en ce que** la seconde ouverture est placée dans une région dans laquelle une condensation peut se produire pendant l'utilisation normale de l'échangeur de chaleur.

7. Echangeur de chaleur selon l'une quelconque des revendications précédentes, **caractérisé en ce que** la section d'échange de chaleur (2) a une forme de caisson, la chambre de combustion (1) s'étendant le long d'une face externe et de préférence d'une face arrière de la forme de caisson.

8. Echangeur de chaleur selon l'une quelconque des revendications précédentes, **caractérisé en ce que** la chambre de combustion (1) est légèrement décalée par rapport à l'axe central de la section d'échangeu de chaleur (2).

9. Echangeur de chaleur selon l'une quelconque des revendications précédentes, **caractérisé en ce que**, près de l'extrémité inférieure de la section d'échange de chaleur (2), est raccordé un siphon qui est destiné à évacuer l'humidité, telle que le condensat, vers l'extérieur de l'échangeur de chaleur.

10. Echangeur de chaleur selon la revendication 9, **caractérisé en ce que** le siphon, dans la direction transversale de l'échangeur de chaleur, est disposé en étant légèrement décalé par rapport à la chambre de combustion (1), alors qu'un tube de cheminée peut être raccordé au siphon à sa partie supérieure, le tube de cheminée pouvant s'étendre derrière la section d'échange de chaleur (2) le long de la chambre de combustion (1).

11. Echangeur de chaleur selon la revendication 9 ou 10, **caractérisé en ce que** le siphon est formé de matière plastique, et la chambre de combustion (1) et des parois entourant la section d'échange de chaleur (2) sont formées d'un métal et de préférence d'aluminium.

12. Echangeur de chaleur selon l'une quelconque des revendications précédentes, **caractérisé en ce que** la chambre de combustion (1) et la section d'échange de chaleur (2) au moins sont incluses dans un seul moulage.
